# EUROPÄISCHE PATENTSCHRIFT

(11) **EP 4 028 371 B1**
(45) Veröffentlichungstag und Bekanntmachung des Hinweises auf die Patenterteilung: **27.09.2023**
(21) Anmeldenummer: 20760813.4
(22) Anmeldetag: 20.08.2020
(51) Int. Cl.: C04B 28/00, C04B 28/02, C04B 28/08, C04B 28/12, C04B 28/14, C04B 28/26, B28B 1/00, B28B 13/02

(54) **BETONELEMENT UND VERFAHREN ZU SEINER HERSTELLUNG**
CONCRETE ELEMENT AND METHOD FOR THE PRODUCTION THEREOF
ÉLÉMENT EN BÉTON ET PROCÉDÉ DE PRODUCTION ASSOCIÉ

(30) Priorität: 13.09.2019 DE 102019124726
(43) Veröffentlichungstag der Anmeldung: 20.07.2022
(73) Patentinhaber: METTEN Technologies GmbH & Co. KG, 51491 Overath (DE)
(72) Erfinder: VOLMER, Guido, 59597 Erwitte (DE); METTEN, Michael, 51467 Bergisch Gladbach (DE)
(74) Vertreter: Cohausz & Florack
(86) Internationale Anmeldenummer: PCT/EP2020/073347
(87) Internationale Veröffentlichungsnummer: WO 2021/047875

(56) Entgegenhaltungen:
- EP-A1- 2 543 649
- EP-A1- 2 597 073
- WO-A1-97/26423
- WO-A1-2016/005566
- DE-A1- 10 331 758
- DE-A1-102010 029 588
- DE-A1-102012 105 975
- DE-U1-202019 102 157

## Beschreibung

Die Erfindung betrifft ein Betonelement umfassend eine Kernbetonschicht und eine Vorsatzbetonschicht, wobei die Vorsatzbetonschicht durch Verdichten und Aushärten einer Mischung enthaltend ein latenthydraulisches Bindemittel und/oder ein puzzolanisches Bindemittel, Wasser, ein körniges Material und ein alkalisches Härtungsmittel erhalten wird. Die Erfindung betrifft ebenfalls ein Verfahren zur Herstellung des erfindungsgemäßen Betonelements.

Betonelemente wie Betonsteine, Betonplatten, Betonmauerelement oder Betonstufen werden aufgrund ihrer Haltbarkeit sowie ihres geringeren Preises im Vergleich zu Steinen, Platten oder Stufen aus Naturstein häufig eingesetzt. Betonelemente werden üblicherweise unter Verwendung von Zement als Bindemittel hergestellt.

Dabei wurden verschiedene Methoden entwickelt, um ein dekoratives Aussehen der Betonelemente zu ermöglichen. Hierzu wird meist unter anderem Pigment und/oder Natursteinzuschläge und/oder Sande zugegeben, um das Betonelement einzufärben.

Zementhaltige Betonelemente weisen mitunter das Problem auf, dass sie mit der Zeit an der Oberfläche weißliche Flecken zeigen. Ferner kann es zu einem Verblassen der Farbe von eingefärbten Betonsteinen kommen. Beide Effekte scheinen durch die Bildung von Kalk zu entstehen. So werden die weißlichen Flecken an der Oberfläche auf Kalkausblühungen zurückgeführt, die sich durch die Reaktion von an die Oberfläche transportiertem Calciumhydroxid mit Kohlenstoffdioxid bilden. Es wird vermutet, dass die Farbverblassung unter anderem dadurch entsteht, dass das Pigment, das sich an den Zementpartikeln zur Farbgebung abgesetzt hat, langsam von sich bildendem Calciumcarbonat überzogen wird. Auf diese Weise geht der Farbeindruck des Pigments langsam verloren.

Alternative Bindemittel zu Zement sind bekannt. Ein Beispiel für derartige alternative Bindemittel basiert auf den chemischen Bausteinen SiOz in Kombination mit Al₂O₃. Beispiele für solche Bindemittel sind unter anderem latenthydraulische Bindemittel und puzzolanische Bindemittel. Diese werden häufig auch als "Geopolymere" bezeichnet. So beschreibt die EP 1 236 702 A1 beispielsweise eine Baustoffmischung enthaltend Wasserglas und ein latent hydraulisches Bindemittel. In der EP 1 236 702 A1 wird vorgeschlagen, die Baustoffmischung als Mörtel oder Spachtel einzusetzen.

Auch die EP 1081 114 A1 beschreibt eine Baustoffmischung für die Herstellung von chemikalienbeständigen Mörteln, wobei die Baustoffmischung Wasserglaspulver, zumindest einen Wasserglashärter, einen anorganischen Füllstoff sowie mindestens 10 Gew.-% eines latent hydraulischen Bindemittels enthält.

Aus der WO 2014/067721 A1 ist ein Aluminosilicatbindemittel bekannt, das durch alkalische Substanzen aktiviert wird. Das Aluminosilicatbindemittel ist laut der WO 2014/067721 A1 für Frischbeton, Betonteile, Sprühbeton, Gebäudekleber und andere Anwendungen geeignet.

Die EP 2 543 649 A1 beschreibt einen ultrahochfesten Beton zusammengesetzt wenigstens aus den Inhaltsstoffen Wasser, Zement, super-reaktives Material, latenthydraulisches Material und inerten Füllstoffen in Form von zwei definierten Gesteinskörnungen.

Die Herstellung von Betonelementen wie Betonsteinen, Betonplatten, Betonmauerelementen oder Betonstufen stellt besondere Anforderungen an die verwendete Betonmischung, insbesondere im Vergleich zu Frischbeton dar. Bei der Herstellung von Betonelementen ist es wünschenswert, nach möglichst kurzer Zeit eine möglichst hohe Stabilität der noch nicht ausgehärteten Betonsteine zu erreichen, um diese schnellstmöglich verpacken zu können. Eine zusätzliche Anforderung an die Produkte, die eine Vorsatzbetonschicht und Kernbeton aufweisen, ist eine hohe Verbundfestigkeit, um das Delaminieren der Vorsatzbetonschicht vom Kern unter Belastung zu verhindern. Als Maß für die Stabilität gegen Delaminieren der Vorsatzbetonschicht vom Kernbeton der Betonelemente kann die Haftzugfestigkeit herangezogen werden. Ist die Haftzugfestigkeit der Betonelemente nicht hoch genug, können sich Vorsatzbetonschicht und Kernbeton unter Last trennen (Delaminieren) oder bereits beim Entschalen auseinanderreißen. Somit können die Betonelemente mit einer geringeren Taktzeit und damit wirtschaftlicher hergestellt werden, wenn sie mit ausreichend hoher Haftzugfestigkeit konzipiert sind.

Im Rahmen der Entwicklung der vorliegenden Erfindung wurde gefunden, dass Betonelemente bzw. Schichten von Betonelementen, die als Bindemittel latenthydraulische Bindemittel und/oder puzzolanische Bindemittel enthalten, bei ansonsten vergleichbaren Herstellungsbedingungen und Bestandteilen eine geringere Haftzugfestigkeit aufweisen, als Betonelemente, die als Bindemittel Zement enthalten. Aufgabe der Erfindung war es somit, ästhetisch anspruchsvolle Betonelemente bereitzustellen, die ihr Aussehen im Laufe der Zeit weniger stark verändern und sich wirtschaftlich herstellen lassen. Insbesondere sollen Betonsteine bereitgestellt werden, die weniger Fleckenbildung und/oder Verschmutzungsneigung an der Oberfläche und/oder weniger Farbverblassung zeigen und/oder eine ausreichend hohe Haftzugfestigkeit aufweisen. Weitere Aufgabe der Erfindung ist es, Betonelemente mit einer verringerten COz-Bilanz bereitzustellen.

Weitere Aufgaben ergeben sich aus den nachfolgenden Ausführungen und werden teilweise hiernach aufgeführt.

Alle oder einige dieser Aufgaben werden erfindungsgemäß durch das Betonelement nach Anspruch 1 und das Verfahren nach Anspruch 16 gelöst.

Vorteilhafte Ausgestaltungen der Erfindung sind in den abhängigen Ansprüchen angegeben und werden nachfolgend im Einzelnen erläutert.

Die Erfindung stellt ein Betonelement bereit, umfassend eine Kernbetonschicht und eine Vorsatzbetonschicht, wobei die Vorsatzbetonschicht durch Verdichten und Aushärten einer Mischung enthaltend ein latenthydraulisches Bindemittel und/oder ein puzzolanisches Bindemittel, Wasser, ein körniges Material und 3 Gew.-% bis 5 Gew.-% eines alkalischen Härtungsmittels, bezogen auf das Gesamtgewicht der Mischung, erhalten wird, wobei das körnige Material bei einer Sieblochweite von 2 mm einen Siebdurchgang von 35,5 Gew.-% bis 99,5 Gew.-% und bei einer Sieblochweite von 0,25 mm einen Siebdurchgang von 2,5 Gew.-% bis 33,5 Gew.-% aufweist, jeweils bezogen auf das Gesamtgewicht des körnigen Materials, und wobei das alkalische Härtungsmittel ausgewählt ist aus der Gruppe bestehend aus Alkalimetalloxide, Alkalimetallhydroxide, Alkalimetallcarbonate, Alkalimetallsilikate, Alkalimetallaluminate und Mischungen davon.

Überraschend hat sich gezeigt, dass Betonelemente umfassend eine Kernbetonschicht und eine Vorsatzbetonschicht, wobei die Vorsatzbetonschicht durch Verdichten und Aushärten einer Mischung enthaltend ein latenthydraulisches Bindemittel und/oder ein puzzolanisches Bindemittel, Wasser, ein körniges Material und 3 Gew.-% bis 5 Gew.-% eines alkalischen Härtungsmittels, bezogen auf das Gesamtgewicht der Mischung, erhalten wird, wobei das körnige Material bei einer Sieblochweite von 2 mm einen Siebdurchgang von 35,5 Gew.-% bis 99,5 Gew.-% und bei einer Sieblochweite von 0,25 mm einen Siebdurchgang von 2,5 Gew.-% bis 33,5 Gew.-% aufweist, jeweils bezogen auf das Gesamtgewicht des körnigen Materials, und wobei das alkalische Härtungsmittel ausgewählt ist aus der Gruppe bestehend aus Alkalimetalloxide, Alkalimetallhydroxide, Alkalimetallcarbonate, Alkalimetallsilikate, Alkalimetallaluminate und Mischungen davon, ihre dekorativen Eigenschaften wenn überhaupt nur langsam verändern und sich wirtschaftlich herstellen lassen. Insbesondere weisen die vorgenannten Betonelemente eine ausreichend hohe Haftzugfestigkeit auf. Dies ermöglicht ein schnelles Entformen ohne Auseinanderreißen der nicht ausgehärteten Betonsteine. Ferner zeigen diese Betonsteine höchstens eine langsame Verblassung der Farben und keine oder nur sehr geringe Fleckenbildung an der Oberfläche.

Ohne an eine bestimmte wissenschaftliche Theorie gebunden sein zu wollen, scheint dies daher zu kommen, dass das Vorhandensein von latenthydraulischem Bindemittel und/oder puzzolanischem Bindemittel bewirkt, dass die Betonsteine ihre dekorativen Eigenschaften nicht oder nur langsam verlieren. Dies scheint dadurch hervorgerufen zu sein, dass die erfindungsgemäßen Betonelemente weniger CaO enthalten als die üblicherweise viel Zement enthaltenden Betonelemente. Ferner hat sich herausgestellt, dass durch den Einsatz eines körnigen Materials, das bei einer Sieblochweite von 2 mm einen Siebdurchgang von 35,5 Gew.-% bis 99,5 Gew.-% und bei einer Sieblochweite von 0,25 mm einen Siebdurchgang von 2,5 Gew.-% bis 33,5 Gew.-% aufweist, bei Verwendung von latenthydraulischen Bindemitteln und/oder puzzolanischen Bindemitteln eine gute Haftzugfestigkeit erreicht werden kann. Mit körnigem Material mit größeren Durchmessern konnten zwar Betonelemente hergestellt werden, die aber eine schlechtere Haftzugfestigkeit aufwiesen. Ohne an eine wissenschaftliche Theorie gebunden sein zu wollen, könnte die verbesserte Haftzugfestigkeit daher kommen, dass die Bestandteile des körnigen Materials mit eher kleineren Durchmessern einen geringeren mittleren Abstand voneinander haben. Dadurch können auch eventuelle kürzere Ketten des latenthydraulischen Bindemittels und/oder puzzolanischen Bindemittels die Bestandteile des körnigen Materials miteinander verknüpfen, wodurch die mechanischen Eigenschaften und insbesondere die Haftzugfestigkeit von noch nicht ausgehärteten Betonelementen verbessert werden.

Das körnige Material kann auch als Gesteinskörnung bezeichnet werden.

Die noch nicht ausgehärteten Betonelemente können auch als Grünbetonelemente bezeichnet werden.

Die Haftzugfestigkeit kann an Betonsteinen mit einem bestimmten Prüfalter, beispielsweise 56 Tage, bestimmt werden. Vorzugsweise weisen erfindungsgemäße Betonelemente eine Haftzugfestigkeit von 1 MPa und mehr auf.

Vorzugsweise weist das körnige Material bei einer Sieblochweite von 2 mm einen Siebdurchgang von 42,5 Gew.-% bis 99,5 Gew.-%, weiter bevorzugt von 56,5 Gew.-% bis 98,5 Gew.-%, besonders bevorzugt von 72,5 Gew.-% bis 97,5 Gew.-%, und bei einer Sieblochweite von 0,25 mm einen Siebdurchgang von 2,5 Gew.-% bis 27,5 Gew.-%, weiter bevorzugt von 2,5 Gew.-% bis 22,5 Gew.-%, noch bevorzugter von 2,5 Gew.-% bis 21,5 Gew.-%, besonders bevorzugt 2,5 Gew.-% bis 8 Gew.-% oder 11,5 Gew.-% bis 21,5 Gew.-%, auf, bezogen auf das Gesamtgewicht des körnigen Materials. Es wurde gefunden, dass körniges Material mit den voranstehend genannten Siebdurchgängen bei den genannten Sieblochweiten Betonelemente mit einer guten Haftzugfestigkeit ergeben können.

Die voranstehend angegebenen Siebdurchgänge bei den beiden Sieblochweiten können beliebig miteinander kombiniert werden.

Das körnige Material kann auch eine Körnungsziffer von 1,59 bis 3,62, bevorzugt von 1,61 bis 3,17, besonders bevorzugt von 1,61 bis 2,55 aufweisen.

Das körnige Material weist vorzugsweise eine abgestufte Kornzusammensetzung auf. Eine abgestufte Kornzusammensetzung weist insbesondere Bestandteile mit verschiedenen Korngrößen auf.

Das körnige Material kann in unterschiedlichen Mengen in der Mischung enthalten sein. Vorzugsweise sind in der Mischung 55 Gew.-% bis 80 Gew.-%, bevorzugt 60 Gew.-% bis 75 Gew.-%, weiter bevorzugt 60 Gew.-% bis 72 Gew.-%, des körnigen Materials enthalten, bezogen auf das Gesamtgewicht der Mischung. Besonders bevorzugt kann die Mischung 60 Gew.-% bis 65 Gew.-%, insbesondere 60 Gew.-% bis 64 Gew.-% des körnigen Materials enthalten, bezogen auf das Gesamtgewicht der Mischung. Die Mischung kann besonders bevorzugt auch 67 Gew.-% bis 72 Gew.-%, des körnigen Materials enthalten, bezogen auf das Gesamtgewicht der Mischung.

Zusätzlich zu den voranstehend genannten Bestandteilen kann die Mischung auch noch weitere Bestandteile enthalten, beispielsweise einen Füller. Vorzugsweise enthält die Mischung 1 Gew.-% bis 30 Gew.-%, bevorzugt 1 Gew.-% bis 20 Gew.-%, weiter bevorzugt 5 Gew.-% bis 18 Gew.-%, noch bevorzugter 5 Gew.-% bis 15 Gew.-%, noch bevorzugter 5 Gew.-% bis 10 Gew.-%, besonders bevorzugt 6 Gew.-% bis 8 Gew.- %, eines Füllers, bezogen auf das Gesamtgewicht der Mischung.

Der Füller weist dabei vorzugsweise bei einer Sieblochweite von 0,025 mm einen Siebdurchgang von 63 Gew.-% bis 99 Gew.-%, bevorzugt von 68 Gew.-% bis 99 Gew.- %, weiter bevorzugt von 90 Gew.-% bis 99 Gew.-%, besonders bevorzugt von 95 Gew.- % bis 99 Gew.-%, und bei einer Sieblochweite von 0,015 mm einen Siebdurchgang von 38 Gew.-% bis 73 Gew.-%, bevorzugt von 58 Gew.-% bis 67 Gew.-%, besonders bevorzugt von 61 Gew.-% bis 66 Gew.-%, auf, bezogen auf das Gesamtgewicht des Füllers. Gute Ergebnisse stellen sich auch ein, wenn der Füller bei einer Sieblochweite von 0,025 mm einen Siebdurchgang von 68 Gew.-% bis 77 Gew.-% und bei einer Sieblochweite von 0,015 mm einen Siebdurchgang von 38 Gew.-% bis 47 Gew.-% aufweist, bezogen auf das Gesamtgewicht des Füllers.

Die voranstehend angegebenen Siebdurchgänge bei den beiden Sieblochweiten können beliebig miteinander kombiniert werden.

Es wurde gefunden, dass durch den Einsatz eines Füllers mit den voranstehend aufgeführten Siebdurchgängen bei den genannten Sieblochweiten die Haftzugfestigkeit, insbesondere von noch nicht ausgehärteten Betonelementen, noch weiter verbessert werden kann. Insbesondere durch den kombinierten Einsatz eines körnigen Materials und eines Füllers mit den voranstehend jeweils genannten Siebdurchgängen bei den genannten Sieblochweiten werden optimale Ergebnisse hinsichtlich der Haftzugfestigkeit erreicht. Dadurch kann die Mischung auch so eingestellt werden, dass sich die dekorativen Eigenschaften des Betonelements nicht oder nur sehr wenig ändern.

Als Füller kommen unterschiedliche Stoffe in Frage. Vorzugsweise ist der Füller ausgewählt aus der Gruppe bestehend aus Flugasche, Hüttensand, Gesteinsmehle, vorzugsweise klassifizierte Gesteinsmehle, Kalksteinmehle, vorzugsweise klassifizierte Kalksteinmehle, und Mischungen davon. Weiter bevorzugt ist der Füller Flugasche oder Hüttensand.

Mit den vorstehend genannten Füllern lassen sich dekorative Betonelemente wirtschaftlich herstellen, deren dekorativen Eigenschaften nicht oder nur langsam verblassen.

Latenthydraulisches Bindemittel und/oder puzzolanisches Bindemittel können in unterschiedlichen Mengen in der Mischung enthalten sein. Vorzugsweise enthält die Mischung 15 Gew.-% bis 40 Gew.-%, bevorzugt 20 Gew.-% bis 30 Gew.-%, weiter bevorzugt 20 Gew.-% bis 24 Gew, besonders bevorzugt 22 Gew.-% bis 24 Gew.-%, an latenthydraulischem Bindemittel und/oder puzzolanischem Bindemittel, bezogen auf das Gesamtgewicht der Mischung. Gute Ergebnisse stellen sich auch ein, wenn die Mischung 26 Gew.-% bis 29 Gew.-% an latenthydraulischem Bindemittel und/oder puzzolanischem Bindemittel enthält, bezogen auf das Gesamtgewicht der Mischung.

Entsprechend kann die Mischung auch nur 15 Gew.-% bis 40 Gew.-%, bevorzugt 20 Gew.-% bis 30 Gew.-%, weiter bevorzugt 20 Gew.-% bis 24 Gew.-% oder 26 Gew.-% bis 29 Gew.-%, besonders bevorzugt 22 Gew.-% bis 24 Gew.-%, bezogen auf das Gesamtgewicht der Mischung, latenthydraulisches Bindemittel und kein puzzolanisches Bindemittel enthalten. Die Mischung kann auch nur 15 Gew.-% bis 40 Gew.-%, bevorzugt 20 Gew.-% bis 30 Gew.-%, weiter bevorzugt 20 Gew.-% bis 24 Gew.-% oder 26 Gew.-% bis 29 Gew.-%, besonders bevorzugt 22 Gew.-% bis 24 Gew.- %, bezogen auf das Gesamtgewicht der Mischung, puzzolanisches Bindemittel und kein latenthydraulisches Bindemittel enthalten.

Es hat sich herausgestellt, dass die resultierenden Betonelemente bei Verwendung von weniger als 15 Gew.-% an latenthydraulischem Bindemittel und/oder puzzolanischem Bindemittel keine ausreichende Festigkeit aufweisen. Der Einsatz von mehr als 40 Gew.-% an latenthydraulischem Bindemittel und/oder puzzolanischem Bindemittel ist hingegen unwirtschaftlich.

Als latenthydraulisches Bindemittel kommen unterschiedliche Stoffe in Frage. Vorzugsweise beträgt im latenthydraulischen Bindemittel das Molverhältnis von (CaO + MgO):SiO₂ von 0,8 bis 2,5, bevorzugt von 1,0 bis 2,0. Latenthydraulische Bindemittel mit einem Molverhältnis von (CaO + MgO):SiO₂ im vorgenannten Bereich härten gut aus.

Vorteilhafterweise ist das latenthydraulische Bindemittel ausgewählt aus der Gruppe bestehend aus Schlacke, Hochofenschlacke, vorzugsweise Hüttensand, insbesondere gemahlener Hüttensand, elektrothermische Phosphorschlacke, Stahlschlacke und Mischungen davon. Weiter bevorzugt ist das latenthydraulische Bindemittel Hüttensand, insbesondere gemahlener Hüttensand.

Schlacke kann entweder industrielle Schlacke, also Abfallprodukte von industriellen Verfahren, oder synthetisch hergestellte Schlacke sein. Letztere ist bevorzugt, da industrielle Schlacke nicht immer in konstanter Menge und Güte vorhanden ist. Hochofenschlacke, insbesondere Hüttensand, ist ein Beispiel für Schlacke.

Gemahlener Hüttensand variiert hinsichtlich der Feinheit und der Partikelgrößenverteilung abhängig von seinem Ursprung und der Behandlungsart. Die Feinheit hat dabei einen Einfluss auf die Reaktivität. Als Maß für die Feinheit kann insbesondere der Blaine Wert verwendet werden. Vorzugsweise weist der gemahlene Hüttensand einen Blaine Wert von 200 bis 1000 m² kg⁻¹, weiter bevorzugt von 450 bis 650 m² kg⁻¹, auf.

Elektrothermische Phosphorschlacke ist ein Abfallprodukt der elektrothermischen Phosphorherstellung. Elektrothermische Phosphorschlacke ist weniger reaktiv als Hochofenschlacke und enthält etwa von 45 bis 50 Gew.-% CaO, etwa von 0,5 bis 3 Gew.-% MgO, etwa von 38 bis 43 Gew.-% SiOz, etwa von 2 bis 5 Gew.-% Al₂O₃ und etwa von 0,2 bis 3 Gew.-% Fe₂O₃ sowie Fluoride und Phosphate.

Stahlschlacke ist ein Abfallprodukt der Stahlherstellung und kann in seiner Zusammensetzung erheblich variieren.

Besonders bevorzugt beträgt im latenthydraulischen Bindemittel das Molverhältnis von (CaO + MgO):SiO₂ von 0,8 bis 2,5 und das latenthydraulische Bindemittel ist aus den vorgenannten Stoffen ausgewählt.

Als puzzolanisches Bindemittel kommen unterschiedliche Stoffe in Frage. Vorzugsweise ist das puzzolanische Bindemittel ausgewählt aus der Gruppe bestehend aus amorphem Siliciumdioxid, gefälltem Siliciumdioxid, pyrogenem Siliciumdioxid, Mikrosilica, Glasmehl, Flugasche wie Braunkohlenflugasche oder Steinkohlenflugasche, Metakaolin, natürliche Puzzolane wie Tuff, Trass oder Vulkanasche, natürliche und synthetische Zeolithe und Mischungen davon. Besonders bevorzugt ist das puzzolanische Bindemittel amorphes Siliciumdioxid.

Das amorphe Siliciumdioxid zeigt vorzugsweise keine Kristallinität in einem Pulverdiffraktogramm. Vorzugsweise wird Glasmehl auch als amorphes Siliciumdioxid angesehen. Vorteilhafterweise weist das amorphe Siliciumdioxid einen SiOz Gehalt von mindestens 80 Gew.-%, vorzugsweise mindestens 90 Gew.-%, auf. Gefälltes Siliciumdioxid wird industriell vorzugsweise durch Fällen von Wasserglass erhalten. Je nach Herstellungsart kann gefälltes Siliciumdioxid auch als Silicagel bezeichnet werden. Pyrogenes Siliciumdioxid wird durch Reaktion von Chlorsilanen wie Siliciumtetrachlorid in einer Knallgasflamme hergestellt. Pyrogenes Siliciumdioxid ist amorphes SiO₂ Pulver mit einem Partikeldurchmesser von 5 bis 50 nm und einer spezifischen Oberfläche von 50 bis 600 m² g⁻¹.

Microsilica ist ein Nebenprodukt der Silicium- oder der Ferrosiliciumherstellung und enthält große Anteile an amorphem SiOz Pulver. Die Partikel haben Durchmesser von etwa 0,1 µm. Die spezifische Oberfläche ist im Bereich von 15 bis 30 m² g⁻¹.

Flugaschen werden beispielsweise bei der Verbrennung in Kohlekraftwerken gebildet. Flugaschen der Klasse F enthalten nach WO 2008/012438 A2 weniger als 8 Gew.-%, vorzugsweise weniger als 5 Gew.-%, CaO.

Metakaolin wird durch Dehydratisierung von Kaolin gebildet. Während Kaolin im Temperaturbereich von 100 bis 200 °C physikalisch gebundenes Wasser abgibt, finden der Zusammenbruch der Gitterstruktur und die Bildung von Metakaolin (Al₂Si₂O₇) in einem Bereich von 500 bis 800 °C statt. Reines Metakaolin enthält vorzugsweise entsprechend etwa 54 Gew.-% SiOz und etwa 46 Gew.-% Al₂O₃.

Es wurde gefunden, dass mit den vorgenannten latenthydraulischen und puzzolanischen Bindemitteln Betonelemente hergestellt werden können, deren dekorative Eigenschaften nicht oder nur sehr langsam verblassen.

Als alkalisches Härtungsmittel kommen unterschiedliche Substanzen in Frage. Erfindungsgemäß ist das alkalische Härtungsmittel ausgewählt aus der Gruppe bestehend aus Alkalimetalloxide, Alkalimetallhydroxide, Alkalimetallcarbonate, Alkalimetallsilikate, Alkalimetallaluminate und Mischungen davon. Weiter bevorzugt ist das alkalische Härtungsmittel ausgewählt aus der Gruppe bestehend aus Alkalimetallhydroxide, Alkalimetallsilikate und Mischungen davon.

Beispiele für Alkalimetalloxide sind LizO, NazO, KzO, (NH₄)₂O und Mischungen davon. Beispiele für Alkalimetallhydroxide sind LiOH, NaOH, KOH, NH₄OH und Mischungen davon. Beispiele für Alkalimetallcarbonate sind Li₂CO₃, Na₂CO₃, K₂CO₃, (NH₄)₂CO₃ und Mischungen davon. Aufgrund seiner Ähnlichkeit zu den Alkalimetallionen wird das Ammoniumion ebenfalls aufgeführt.

Zweckmäßigerweise sind Alkalimetallsilikate ausgewählt aus Verbindungen mit der empirischen Formel m SiO₂ · n MzO, wobei M Li, Na, K oder NH₄ oder eine Mischung davon, bevorzugt Na oder K, ist. Das molare Verhältnis von m:n beträgt von 0,5 bis 3,6, vorzugsweise von 0,6 bis 3,0, besonders bevorzugt von 0,7 bis 2,0. Als besonders zweckmäßiges Alkalimetallsilikat hat sich Wasserglas, insbesondere flüssiges Wasserglas, weiter bevorzugt flüssiges Natrium- und/oder Kaliumwasserglas herausgestellt. Kieselsäure, insbesondere wässrige Kieselsäure, ist eine weiteres zweckmäßiges Alkalimetallsilikat.

Die vorgenannten alkalischen Härtungsmittel werden vorzugsweise als wässrige Lösung eingesetzt. Dies erleichtert die Dosierbarkeit.

Mit den vorgenannten alkalischen Härtungsmitteln lässt sich das Aushärten der Vorsatzbetonschicht gut einstellen. Ferner zeigen diese alkalischen Härtungsmittel eine gute Kompatibilität mit den übrigen Komponenten in der Mischung.

Das alkalische Härtungsmittel kann in unterschiedlichen Mengen in der Mischung enthalten sein. Erfindungsgemäß enthält die Mischung 3 Gew.-% bis 5 Gew.-%, bevorzugt 3,15 Gew.-% bis 4,85 Gew.-%, weiter bevorzugt 4,0 Gew.-% bis 4,75 Gew.- %, noch bevorzugter 4,25 Gew.-% bis 4,75 Gew.-%, besonders bevorzugt 4,35Gew.-% bis 4,55Gew.-%, des alkalischen Härtungsmittels, bezogen auf das Gesamtgewicht der Mischung. Gute Ergebnisse stellen sich auch ein, wenn die Mischung 3,25 Gew.-% bis 3,65 Gew.-% des alkalischen Härtungsmittels enthält, bezogen auf das Gesamtgewicht der Mischung. Es wurde herausgefunden, dass die Vorsatzbetonschicht bei Einsatz von weniger als 3 Gew.-% des alkalischen Härtungsmittels zu langsam aushärtet. Bei Einsatz von mehr als 5 Gew.-% an alkalischem Härtungsmittel kann die Aushärtung zu schnell einsetzen, so dass die Vorsatzbetonschicht nicht mehr gut verdichtet werden kann.

Erfindungsgemäß enthält die Mischung Wasser. Vorzugsweise enthält die Mischung 3 Gew.-% bis 7 Gew.-%, bevorzugt 3,5 Gew.-% bis 6,5 Gew.-%, weiter bevorzugt 4,0 Gew.-% bis 6,2 Gew.-%, noch bevorzugter 4,2 Gew.-% bis 4,9 Gew.-%, besonders bevorzugt 4,2 Gew.-% bis 4,8 Gew.-%, Wasser, bezogen auf das Gesamtgewicht der Mischung. Gute Ergebnisse stellen sich auch ein, wenn die Mischung 5,2 Gew.-% bis 6,2 Gew.-% Wasser enthält, bezogen auf das Gesamtgewicht der Mischung.

Neben den Komponenten Bindemittel, Wasser, körniges Material und alkalisches Härtungsmittel kann die Mischung auch noch weitere Bestandteile enthalten. Beispielsweise kann die Mischung auch einen oder mehrere Zuschlagstoffe wie Kies, Splitt, Sand, Perlit, Kieselguhr oder Vermiculit enthalten. Vorzugsweise enthält die Mischung Zement und/oder einen oder mehrere Zuschlagstoffe wie Kies, Splitt, Sand, Perlit, Kieselguhr oder Vermiculit, und/oder ein oder mehrere Additive ausgewählt aus der Gruppe bestehend aus Weichmacher, Antischaummittel, Wasserrückhaltemittel, Dispergiermittel, Pigment, Fasern, redispergierbare Pulver, Netzmittel, Imprägniermittel, Komplexbildner und Rheologieadditive.

Alternativ ist die Mischung vorzugsweise frei von Zement. Dadurch können insbesondere Betonelemente hergestellt werden, die eine vorteilhafte Kohlenstoffdioxid-Bilanz aufweisen.

Vorteilhafterweise enthält die Mischung Erhärtungsregler. Als Erhärtungsregler kommen insbesondere Abbindeverzögerer und/oder Abbindebeschleuniger in Frage.

Mit den vorgenannten Additiven können die Eigenschaften der Mischung gut gesteuert werden. Insbesondere kann mit den vorgenannten Additiven das Erhärtungsverhalten gut gesteuert werden.

Die Mischung enthält vorzugsweise 0,1 Gew.-% bis 2 Gew.-%, weiter bevorzugt 0,4 Gew.-% bis 1,5 Gew.-% an Additiven, bezogen auf das Gesamtgewicht der Mischung. Zweckmäßigerweise enthält die Mischung 0,025 Gew.-% bis 0,097 Gew.-% oder 1,5 Gew.-% bis 2 Gew.-% Abbindeverzögerer und/oder Abbindebeschleuniger.

Das erfindungsgemäße Betonelement weist vorzugsweise eine Verdichtungsklasse gemäß der Norm DIN 1045-2 C0 oder C01 auf. Vorzugsweise ist das Betonelement ein Betonstein, eine Betonplatte, ein Betonmauerelement oder eine Betonstufe.

Die Erfindung stellt auch ein Verfahren zur Herstellung erfindungsgemäßer Betonelemente bereit, umfassend die Schritte:
a. Herstellen einer Zusammensetzung enthaltend als Bestandteile
   i. körniges Material,
   ii. optional Pigment,
   iii. optional Füller,
   iv. Wasser,
   v. latenthydraulisches Bindemittel und/oder puzzolanisches Bindemittel, und
   vi. alkalisches Härtungsmittel, wobei das alkalische Härtungsmittel ausgewählt ist aus der Gruppe bestehend aus Alkalimetalloxide, Alkalimetallhydroxide, Alkalimetallcarbonate, Alkalimetallsilicate, Alkalimetallaluminate und Mischungen davon,
b. Mischen der Zusammensetzung um eine Mischung zu erhalten, die 3 Gew.- % bis 5 Gew.-% des Alkalischen Härtungsmittels enthält, bezogen auf das Gesamtgewicht der Mischung,
c. Einfüllen der Mischung in mindestens eine Form,
d. Verdichten der Mischung, um mindestens ein Grünbetonelement zu erhalten,
wobei das körnige Material bei einer Sieblochweite von 2 mm einen Siebdurchgang von 35,5 Gew.-% bis 99,5 Gew.-% und bei einer Sieblochweite von 0,25 mm einen Siebdurchgang von 2,5 Gew.-% bis 33,5 Gew.-% aufweist.

Vorzugsweise wird die Mischung in mindestens einer Form verdichtet. Das Verdichten kann mittels Stempeln und/oder Vibration erfolgen.

Vorzugsweise werden die Verfahrensschritte in der oben angegebenen Reihenfolge durchgeführt.

Ferner werden die Bestandteile der Zusammensetzung vorteilhafterweise in der angegebenen Reihenfolge dosiert. Es wurde gefunden, dass bei Zugabe der Bestandteile in der oben angegebenen Reihenfolge eine gute Verarbeitbarkeit der Mischung erreicht wird. Es hat sich zudem als zweckmäßig herausgestellt, wenn die Bestandteile der Zusammensetzung beim Dosieren schon vermischt werden.

Für das körnige Material, den Füller, das Wasser, das latenthydraulische Bindemittel und/oder das puzzolanische Bindemittel und das alkalische Härtungsmittel gilt das voranstehend für das erfindungsgemäße Betonelement Gesagte entsprechend, insbesondere auch im Hinblick auf die eingesetzten Mengen der Bestandteile.

Ferner kann die Zusammensetzung auch die voranstehend aufgeführten weiteren Bestandteile wie Zuschlagstoffe, Additive, Abbindeverzögerer und/oder Abbindebeschleuniger enthalten. Vorteilhafterweise werden Zuschlagstoffe, Additive Abbindeverzögerer und/oder Abbindebeschleuniger mit dem Wasser oder dem optionalen Pigment, vorzugsweise mit dem Wasser, zudosiert.

Im erfindungsgemäßen Verfahren ist es möglich, die Oberfläche der Betonelemente zu gestalten. Gemäß einer Ausführungsform wird vor dem Verdichten auf die Mischung in der mindestens einen Form eine Portion eines gekörnten Materials enthaltend (a) eine Einstreukomponente mit einem mittleren Korndurchmesser von 0,1 bis 5 mm in einer Menge von 65 bis 95 Gew.-%, bevorzugt 75 bis 85 Gew.-%, und (b) Bindemittel in einer Menge von 5 bis 35 Gew.-%, bevorzugt 15 bis 25 Gew.-%, bezogen auf die Gesamtzusammensetzung des gekörnten Materials, aufgebracht.

Durch Verwendung der Einstreukomponente und Bindemittels in diesen Konzentrationsbereichen kann eine gute Verankerung des gekörnten Materials auf der Oberfläche des Betonelements erreicht werden.

Unter dem mittleren Korndurchmesser versteht der Fachmann denjenigen Durchmesser, bei dem es gleich viele Körner mit größerem und mit kleinerem Durchmesser gibt. Der mittlere Korndurchmesser kann beispielsweise durch Sieben bestimmt werden.

Um gemäß dieser Ausführungsform des erfindungsgemäßen Verfahrens ästhetisch besonders ansprechende Betonelemente herzustellen, hat es sich als vorteilhaft erwiesen, wenn die Vorsatzbetonschicht eine optische Eigenschaft wie Farbe oder Glanzgrad aufweist und das gekörnte Material eine von dieser abweichende optische Eigenschaft aufweist. Dadurch besteht beispielsweise die Möglichkeit, geflammte, geäderte oder gesprenkelte Oberflächen zu erzeugen, die der natürlichen Struktur von Natursteinen ähnlich sehen.

Das gekörnte Material wird gemäß dieser Ausführungsform vorzugsweise mittels einer Aufbringvorrichtung auf die Mischung aufgebracht. Die Aufbringvorrichtung kann zumindest eine Rieselvorrichtung, eine Schleuderscheibe, ein Schaufelrad, einen Wurfarm und/oder ein Katapult aufweisen, denen mindestens eine Portion des gekörnten Materials zugeführt wird. Diese können sich über die Form oder neben der Form bewegen und es können ihnen auch unterschiedliche Portionen mit unterschiedlichem Zeitabstand zugeführt werden. Auf diese Weise kann das gekörnte Material gleichmäßig auf die Mischung aufgebracht werden. Weiterhin hat sich herausgestellt, dass das erfindungsgemäße Verfahren auf diese Art besonders wirtschaftlich durchgeführt werden kann.

Vorteilhafterweise weist die Aufbringvorrichtung zumindest einen gekörntes Material enthaltenden Dosierbehälter mit einer Dosierleiste auf, wobei der Dosierbehälter mit gleichmäßiger oder ungleichmäßiger Geschwindigkeit über die Form geführt wird.

Dabei werden auf die Dosierleiste vorzugsweise Vibrationen oder Rüttelstöße ausgeübt, die gleichmäßig und/oder ungleichmäßig und/oder intermittierend ausgeführt werden.

Bevorzugt können der Dosierleiste entlang ihrer Erstreckung unterschiedliche Veredelungsmaterialien und/oder unterschiedliche Portionen Veredelungsmaterial zugeführt werden.

Weiterhin hat es sich auch als vorteilhaft erwiesen, wenn der Dosierbehälter an der Vorderkante des Dosierwagens für den Beton, vorzugsweise den Vorsatzbeton, angebracht wird.

Mögliche Ausgestaltungen einer Aufbringvorrichtung mit zumindest einem Dosierbehälter mit einer Dosierleiste sind beispielsweise in EP 2 910 354 A1 beschrieben. Ein Beispiel für eine Aufbringvorrichtung mit zumindest einem Dosierbehälter mit einer Dosierleiste ist ein Füllwagen mit mindestens einer Kammer. In dieser Kammer kann das gekörnte Material enthalten sein. Der Füllwagen kann auch zwei oder mehr durch eine Trennwand separierte Kammern aufweisen. Dann ist vorteilhafterweise in einer ersten Kammer des Füllwagens die erfindungsgemäße Mischung enthalten. In einer zweiten Kammer ist vorzugsweise das gekörnte Material enthalten. Weitere Kammern können weitere gekörnte Materialien mit anderen Eigenschaften, beispielsweise einer anderen Farbe, enthalten. Der Füllwagen kann entlang einer Führungsschiene über eine Form bewegt werden.

Die Kammer mit dem gekörnten Material kann ein Aufbringelement aufweisen. Das Aufbringelement kann aus der Kammer herausgenommen werden. Die Kammer kann ein oder mehrere Aufbringelemente aufweisen.

Das Aufbringelement weist vorzugsweise eine perforierte Dosierplatte mit mindestens einem, vorzugsweise mehreren Löchern und ein Dosierelement auf. Die Löcher können einheitlich oder in einem Muster in der Dosierplatte angeordnet sein. Die Löcher können den gleichen oder unterschiedliche Durchmesser aufweisen. Die Dosierplatte kann flach oder gebogen sein. Die Dosierplatte kann auch zylinderförmig ausgestaltet sein. Die Dosierplatte kann insbesondere die Dosierleiste bilden.

Das Dosierelement kann unterschiedlich ausgestaltet sein. Das Dosierelement kann beispielsweise eine Welle aufweisen, an der Flügel befestigt sind und die um die Längsachse der Welle drehbar ist. Das gekörnte Material befindet sich vorzugsweise in den Zwischenräumen, die durch zwei Flügel der Welle und den zugehörigen Abschnitt der Dosierplatte gebildet werden. Durch Drehen der Welle um ihre Längsachse drücken die Flügel das gekörnte Material durch die Löcher der Dosierplatte, das dadurch auf die Mischung aufgebracht wird. Ein derartiges Dosierelement wird vorzugsweise in Verbindung mit einer gebogenen Dosierplatte eingesetzt.

Das Dosierelement kann auch kammartig ausgestaltet sein. Dabei liegt vorzugsweise das kammartige Dosierelement beweglich auf einer flachen Dosierplatte auf. Das gekörnte Material liegt vorzugsweise zwischen den Zinken des Kamms auf der Dosierplatte. Durch Bewegen des Kamms auf der Dosierplatte wird das gekörnte Material durch die Löcher der Dosierplatte gedrückt, das dadurch auf die Mischung aufgebracht wird.

Das Dosierelement kann auch eine perforierte Platte sein. Die perforierte Platte liegt vorzugsweise auf einer flachen Dosierplatte auf. Das gekörnte Material liegt vorzugsweise in den Löchern der perforierten Platte auf der Dosierplatte. Durch Bewegen der perforierten Platte auf der Dosierplatte wird das gekörnte Material durch die Löcher der Dosierplatte gedrückt, das dadurch auf die Mischung aufgebracht wird.

Schließlich kann das Dosierelement auch ein frei bewegliches Element sein, das vorzugsweise im Inneren einer zylinderförmigen Dosierplatte angeordnet ist. Das gekörnte Material ist vorzugsweise ebenfalls im Inneren der zylinderförmigen Dosierplatte angeordnet. Das frei bewegliche Element ist dabei in der Lage, durch sein Eigengewicht das gekörnte Material durch die Löcher der Dosierplatte zu drücken. Durch Bewegen, insbesondere Drehen, der zylinderförmigen Dosierplatte wird das gekörnte Material durch die Löcher der Dosierplatte gedrückt, das dadurch auf die Mischung aufgebracht wird.

Das Aufbringelement umfasst vorteilhafterweise ferner weitere Bestandteile wie einen Aktuator mit dem das Dosierelement bewegt werden kann. Der Aktuator kann mit einem Elektromotor verbunden sein, der vorzugsweise durch elektronische Steuermittel kontrolliert werden kann. Das Aufbringelement kann auch eine Aktuatorstange, einen Nockenstößel, der mit einem Nocken in Eingriff steht, und/oder ein Getriebe aufweisen.

Gemäß einer bevorzugten Ausgestaltungsform des erfindungsgemäßen Verfahrens weist die Aufbringvorrichtung zumindest einen Rohrstutzen auf, dem eine oder mehrere Portionen eines gekörnten Materials zugeführt werden und durch den diese auf die Vorsatzbetonschicht, gestreut, geworfen, geschossen und/oder fallen gelassen werden. Eine besonders gute Verteilung auf die Form ergibt sich, wenn das Rohrstutzenende nach Art einer Düse ausgebildet ist.

Praktische Versuche haben gezeigt, dass es im erfindungsgemäßen Verfahren zu einer guten Verteilung auch beiträgt, wenn der Auswurf mittels eines vorgespannten, federbelasteten Kolbens erfolgt, dessen Verrieglung zum Werfen plötzlich gelöst wird.

Vorzugsweise kann die Aufbringvorrichtung über die Form und/oder neben der Form bewegt werden. Sie kann dabei unterschiedliche Bewegungsgeschwindigkeiten aufweisen bzw. erreichen, wobei auch ein ruckartiges Bewegen vorteilhaft sein kann. Je nach Größe der Form und je nach farblicher Bestückung der Aufbringvorrichtung mit gekörntem Material können auch mehrere und auch unterschiedliche Vorrichtungen für eine Form benutzt werden, damit eine Vergleichmäßigung des Aufbringens oder ein spezielles charakteristisches Aufbringbild des gekörnten Materials erreicht wird.

Vorzugsweise werden bei den Aufbringvorrichtungen Leitbleche benutzt, da derartige Scheibenräder oder Wurfarme und auch Rohrstutzen eine größere Streuung haben können.

Durch die Aufbringvorrichtungen können mehrere Portionen des gekörnten Materials hintereinander ausgeworfen werden, wobei es sich dabei um unterschiedliche gekörnte Materialien, wie zuvor beschrieben, handeln kann.

Vorzugsweise ist das im gekörnten Material enthaltene Bindemittel ein anorganisches Bindemittel wie Zement, hydraulischer Kalk, Gips oder Wasserglas oder das im gekörnten Material enthaltene Bindemittel ein organisches Bindemittel wie Kunstoffdispersionen, Acrylatharze, Alkydharze, Epoxidharze, Polyurethane, SolGel-Harze oder Siliconharzemulsionen ist. Derartige Bindemittel sind im Zusammenhang mit Betonelementen besonders einfach handzuhaben. Zudem stellen sie keine zusätzlichen Anforderungen an das Verfahren. Weiterhin erlauben derartige Bindemittel eine gute Verankerung des körnigen Materials auf dem Betonelement.

In Abhängigkeit des gewünschten optischen Eindrucks des Betonelements können Einstreukomponenten mit unterschiedlichen mittleren Korndurchmessern verwendet werden. So kann als Einstreukomponente eine Einstreukomponente mit einem mittleren Korndurchmesser von 0,1 bis 1,8 mm eingesetzt werden. Alternativ kann eine Einstreukomponente mit einem mittleren Korndurchmesser von 1,2 bis 5 mm eingesetzt werden.

Vorzugsweise wird als Einstreukomponente eine Einstreukomponente mit einem mittleren Korndurchmesser von 0,1 bis 1,2 mm eingesetzt.

Das gekörnte Material kann auch kleine Gesteinskörner enthalten, so dass verschiedenartige Materialien mit unterschiedlichen Farben, auch Körnungen von Halbedelsteinen oder Edelsteinen oder Glimmer oder Metallspäne oder Kunststoffpartikel oder Glaspartikel in die Oberflächen- oder Vorsatzbetonschicht eingebracht werden können. Das körnige Material kann auch eine beliebige Gesteinsmischung sein.

Als besonders praktikabel hat es sich im erfindungsgemäßen Verfahren erwiesen, wenn die Einstreukomponente eine Gesteinsmischung ist oder enthält. Hiermit können Betonelemente hergestellt werden, die dem Erscheinungsbild von Natursteinen sehr nahe kommen.

Vorzugsweise enthält im erfindungsgemäßen Verfahren die Einstreukomponente mindestens Material ausgewählt aus der Gruppe bestehend aus Halbedelsteinen, Edelsteinen, Glimmer, Metallspänen, Glas und Kunststoffpartikeln. Eine Verwendung dieser Materialien erlaubt ein sehr wirtschaftliches Verfahren.

Das gekörnte Material kann im erfindungsgemäßen Verfahren insbesondere eine abgestufte Kornzusammensetzung von max. 2 mm Korndurchmesser aufweisen.

Die Oberflächen und/oder Ränder des mindestens einen Grünbetonelements können im erfindungsgemäßen Verfahren mit Bürsten bearbeitet und dabei strukturiert und/oder aufgeraut und/oder geglättet und/oder Überstände an den Rändern abgearbeitet werden. Dadurch kann ein dekorativer optischer Eindruck noch verstärkt werden.

Vor, vorzugsweise aber nach dem Verdichten kann auf die Oberflächen der Betonelemente vor oder auch nach dem Aushärten ein organisches oder anorganisches Mittel, das vorzugsweise farblos ist, aufgebracht werden. Es handelt sich dabei um ein Imprägnieren, Versiegeln oder Beschichten der Betonelemente. Insbesondere kann auf die Oberfläche des mindestens einen Grünbetonelements ein Versiegelungs- und/oder Imprägniermittel aufgebracht werden. Ein derartiges Vorgehen fügt den Betonelementen eine weitere Schutzschicht hinzu, die die Haltbarkeit und die Lebensdauer der Betonelemente zusätzlich weiter erhöht. Außerdem kann diese Schicht als Fleckenschutz wirken und zusätzlich Kalkausblühungen verhindern.

Das Grünbetonelement wird im erfindungsgemäßen Verfahren vorzugsweise ausgehärtet, um ein Betonelement zu erhalten. Vorzugsweise wird das Betonelement nach dem Aushärten durch Schleifen, Strahlen, Bürsten und/oder Strukturieren des Betonelements bearbeitet.

Zur weiteren Erläuterung werden nachfolgend nicht limitierende Beispiele aufgeführt.

### BEISPIELE

### Materialien

Bindemittelmischung: enthaltend vorwiegend latenthydraulisches Bindemittel und puzzolanisches Bindemittel.

Körniges Material: Gesteinskörnung mit einem Siebdurchgang bei einer Sieblochweite von 2 mm von 72,5 Gew.-% und einem Siebdurchgang bei einer Sieblochweite von 0,25 mm von 7,5 Gew.-%.

Füller: Gemisch aus Gesteinsmehl, Flugasche und/oder gemahlenem Hüttensand mit einem Siebdurchgang bei einer Sieblochweite von 0,025 mm von 97 Gew.-% und einem Siebdurchgang bei einer Sieblochweite von 0,015 mm von 63 Gew.-%.

Alkalisches Härtungsmittel: 75-%ige Kieselsäure.

Pigment: Metalloxidpigment.

Additiv: Abbindeverzögerer/Abbindebeschleuniger.

Gekörntes Material: enthaltend 80 Gew.-% kleine Gesteinskörner mit einem mittleren Korndurchmesser von 0,7 mm und 20 Gew.-% anorganisches Bindemittel.

Die Bestimmung der Haftzugfestigkeit erfolgt nach der DAfSt Richtlinie "Schutz und Instandsetzungen von Betonbauteilen", Teil 4, Abschnitt 5.5.11. Abweichend wird eine Bohrtiefe von 50 mm gewählt.

### Beispiel 1

In einen Mischbehälter wurden nacheinander 61 Gew.-% körniges Material, 1,1 Gew.- % Pigment, 6,8 Gew.-% Füller, 4,4 Gew.-% Wasser, 22,3 Gew.-% Bindemittelmischung, 4,36 Gew.-% alkalisches Härtungsmittel, und 0,04 Gew.-% Additiv eingefüllt, um eine Zusammensetzung zu erhalten, wobei sich die vorstehenden Angaben auf das Gesamtgewicht der Zusammensetzung beziehen. Die Zusammensetzung wurde anschließend in dem Mischbehälter vermischt, um eine Mischung zu erhalten. Die so erhaltene Mischung wurde als Vorsatzbetonschicht in Formen eines Formbretts, in denen bereits Rohbeton vorhanden war, eingefüllt. Die Vorsatzbetonschicht wies eine Grundfarbe auf. Anschließend wurde die Mischung in der Form durch Stempeln verdichtet, wodurch ein Grünbetonelement erhalten wurde. Beim Entformen war kein Auseinanderreißen des Grünbetonelements zu beobachten. Nach dem Entformen wies das Grünbetonelement eine Haftzugfestigkeit von mehr als 1,5 MPa (Prüfalter 56d) auf. Nach dem Aushärten wurden so optisch ansprechende Betonelemente erhalten. Die Betonelemente zeigten über einen Zeitraum von 6 Monaten keine erkennbare Verblassung oder anderweite Verschlechterung ihrer dekorativen Eigenschaften.

### Beispiel 2

In einen Mischbehälter wurden nacheinander 67 Gew.-% körniges Material, 1,1 Gew.- % Pigment, 4,4 Gew.-% Wasser, 23,1 Gew.-% Bindemittelmischung, 4,36 Gew.-% alkalisches Härtungsmittel, und 0,04 Gew.-% Additiv eingefüllt, um eine Zusammensetzung zu erhalten, wobei sich die vorstehenden Angaben auf das Gesamtgewicht der Zusammensetzung beziehen. Die Zusammensetzung wurde anschließend in dem Mischbehälter vermischt, um eine Mischung zu erhalten. Die so erhaltene Mischung wurde als Vorsatzbetonschicht in Formen eines Formbretts, in denen bereits Rohbeton vorhanden war, eingefüllt. Die Vorsatzbetonschicht wies eine Grundfarbe auf. Anschließend wurde die Mischung in der Form durch Stempeln verdichtet, wodurch ein Grünbetonelement erhalten wurde. Beim Entformen war kein Auseinanderreißen des Grünbetonelements zu beobachten. Nach dem Entformen wies das Betonelement eine Haftzugfestigkeit von mehr als 1 MPa (Prüfalter 56d) auf. Nach dem Aushärten wurden so optisch ansprechende Betonelemente erhalten. Die Betonelemente zeigten über einen Zeitraum von 6 Monaten keine erkennbare Verblassung oder anderweite Verschlechterung ihrer dekorativen Eigenschaften.

### Beispiel 3

Beispiel 3 ist identisch mit Beispiel 1 mit dem Unterschied, dass vor dem Stempeln ein gekörntes Material mit einer Schleuderscheibe auf die Vorsatzbetonschicht aufgebracht wurde. Die Ebene der Schleuderscheibe war etwa parallel zur Oberfläche des Formbretts mit Abstand zu diesem ausgerichtet. Die Aufbringvorrichtung konnte sich über dem Formbrett bewegen, so dass alle Vorsatzbetonschichten in den Formen beliebig erreicht werden konnten. Oberhalb der Schleuderscheibe war ein Trichter angeordnet, in dem das gekörnte Material eingefüllt war. Durch eine Vorrichtung zum Öffnen und Schließen an der unteren Trichteröffnung konnten beliebige Portionen des gekörnten Materials auf die Schleuderscheibe geleitet werden. Grundsätzlich können oberhalb der Schleuderscheibe mehrere Trichter angeordnet sein, in denen unterschiedliche gekörnte Materialien enthalten sind, um die Oberflächen der Vorsatzbetonschichten mit verschiedenen gekörnten Materialien in verschiedenen Dosierungen bewerfen zu können. Auch die Drehzahl der Schleuderscheibe und dessen Höhenlage zum Formbrett kann beliebig verstellt und variiert werden, auch während der Wurfbewegung, ebenso die Bewegungsgeschwindigkeit entlang der Form. Beim Entformen war kein Auseinanderreißen des Grünbetonelements zu beobachten. Nach dem Entformen wies das Grünbetonelement eine Haftzugfestigkeit von mehr als 1,5 MPa auf. Nach dem Aushärten wurden so optisch ansprechende Betonelemente mit einer gesprenkelten Oberfläche erhalten. Die Betonelemente zeigten über einen Zeitraum von 6 Monaten keine erkennbare Verblassung oder anderweite Verschlechterung ihrer dekorativen Eigenschaften.

### Beispiel 4 (Vergleichsbeispiel)

Beispiel 4 ist mit Beispiel 1 identisch mit dem Unterschied, dass das körnige Material bei einer Siebweite von 2,0 mm einen Siebdurchgang von 100% und bei einer Siebweite von 0,25 mm einen Siebdurchgang von 31,5% aufweist.

Die Zusammensetzung wurde anschließend in dem Mischbehälter vermischt, um eine Mischung zu erhalten. Die so erhaltene Mischung wurde als Vorsatzbetonschicht in Formen eines Formbretts, in denen bereits Rohbeton vorhanden war, eingefüllt. Die Vorsatzbetonschicht wies eine Grundfarbe auf. Anschließend wurde die Mischung in der Form durch Stempeln verdichtet, wodurch ein Grünbetonelement erhalten wurde. Beim Entformen rissen jedoch Teile der Oberfläche und/oder der Vorsatzschicht der Betonelemente ab, so dass beschädigte Oberflächen erhalten wurden. Diese Betonelemente konnten nicht weiter verwendet werden. Eine Bestimmung der Haftzugfestigkeit an unbeschädigten Teilen der Betonelemente zeigte, dass die Betonelemente eine Haftzugfestigkeit von deutlich weniger als 1 MPa aufwiesen.

### Beispiel 5

Beispiel 5 ist mit Beispiel 1 identisch mit dem Unterschied, dass kein Additiv zugegeben wurde (Abbindebeschleuniger/Abbindeverzögerer) Die Zusammensetzung wurde anschließend in dem Mischbehälter vermischt, um eine Mischung zu erhalten. Die so erhaltene Mischung wies eine sehr kurze Topfzeit, also die Zeitspanne, während der die Mischung noch aus dem Mischbehälter in Formen eingefüllt werden konnte, auf.

### Beispiel 6

In einen Mischbehälter wurden nacheinander 63,5 Gew.-% körniges Material, 1,1 Gew.-% Pigment, 4,01 Gew.-% Wasser, 27,2 Gew.-% Bindemittelmischung, 4,15 Gew.- % alkalisches Härtungsmittel, und 0,04 Gew.-% Additiv eingefüllt, um eine Zusammensetzung zu erhalten, wobei sich die vorstehenden Angaben auf das Gesamtgewicht der Zusammensetzung beziehen. Die Zusammensetzung wurde anschließend in dem Mischbehälter vermischt, um eine Mischung zu erhalten. Die so erhaltene Mischung wurde als Vorsatzbetonschicht in Formen eines Formbretts, in denen bereits Rohbeton vorhanden war, eingefüllt. Die Vorsatzbetonschicht wies eine Grundfarbe auf. Anschließend wurde die Mischung in der Form durch Stempeln verdichtet, wodurch ein Grünbetonelement erhalten wurde. Beim Entformen war kein Auseinanderreißen des Grünbetonelements zu beobachten. Nach dem Entformen wies das Betonelement eine Haftzugfestigkeit von etwas weniger als 1 MPa (Prüfalter 56d) auf.

## Patentansprüche

1. Betonelement umfassend eine Kernbetonschicht und eine Vorsatzbetonschicht, wobei die Vorsatzbetonschicht durch Verdichten und Aushärten einer Mischung enthaltend ein latenthydraulisches Bindemittel und/oder ein puzzolanisches Bindemittel, Wasser, ein körniges Material und 3 Gew.-% bis 5 Gew.-% eines alkalischen Härtungsmittels, bezogen auf das Gesamtgewicht der Mischung, erhalten wird, wobei das körnige Material bei einer Sieblochweite von 2 mm einen Siebdurchgang von 35,5 Gew.-% bis 99,5 Gew.-% und bei einer Sieblochweite von 0,25 mm einen Siebdurchgang von 2,5 Gew.-% bis 33,5 Gew.- % aufweist, jeweils bezogen auf das Gesamtgewicht des körnigen Materials, und wobei das alkalische Härtungsmittel ausgewählt ist aus der Gruppe bestehend aus Alkalimetalloxide, Alkalimetallhydroxide, Alkalimetallcarbonate, Alkalimetallsilikate, Alkalimetallaluminate und Mischungen davon.

2. Betonelement nach Anspruch 1, **dadurch gekennzeichnet, dass** das körnige Material bei einer Sieblochweite von 2 mm einen Siebdurchgang von 42,5 Gew.- % bis 99,5 Gew.-%, weiter bevorzugt von 56,5 Gew.-% bis 98,5 Gew.-%, besonders bevorzugt von 72,5 Gew.-% bis 97,5 Gew.-%, und bei einer Sieblochweite von 0,25 mm einen Siebdurchgang von 2,5 Gew.-% bis 27,5 Gew.- %, weiter bevorzugt von 2,5 Gew.-% bis 22,5 Gew.-%, noch bevorzugter von 2,5 Gew.-% bis 21,5 Gew.-%, besonders bevorzugt 2,5 Gew.-% bis 8 Gew.-% oder 11,5 Gew.-% bis 21,5 Gew.-%, aufweist, bezogen auf das Gesamtgewicht des körnigen Materials.

3. Betonelement nach einem der vorstehenden Ansprüche, **dadurch gekennzeichnet, dass** die Mischung 55 Gew.-% bis 80 Gew.-%, bevorzugt 60 Gew.-% bis 75 Gew.-%, weiter bevorzugt 60 Gew.-% bis 72 Gew.-%, besonders bevorzugt 60 Gew.-% bis 65 Gew.-%, insbesondere 60 bis 64 Gew.-%, oder 67 Gew.-% bis 72 Gew.-%, des körnigen Materials enthält, bezogen auf das Gesamtgewicht der Mischung.

4. Betonelement nach einem der vorstehenden Ansprüche, **dadurch gekennzeichnet, dass** die Mischung 1 Gew.-% bis 30 Gew.-%, bevorzugt 1 Gew.- % bis 20 Gew.-%, weiter bevorzugt 5 Gew.-% bis 18 Gew.-%, noch bevorzugter 5 bis 15 Gew.-%, noch bevorzugter 5 Gew.-% bis 10 Gew.-%, besonders bevorzugt 6 Gew.-% bis 8 Gew.-%, eines Füllers enthält, bezogen auf das Gesamtgewicht der Mischung.

5. Betonelement nach Anspruch 4, **dadurch gekennzeichnet, dass** der Füller bei einer Sieblochweite von 0,025 mm einen Siebdurchgang von 63 Gew.-% bis 99 Gew.-%, bevorzugt von 68 Gew.-% bis 99 Gew.-%, weiter bevorzugt von 90 Gew.- % bis 99 Gew.-%, besonders bevorzugt von 95 Gew.-% bis 99 Gew.-%, und bei einer Sieblochweite von 0,015 mm einen Siebdurchgang von 38 Gew.-% bis 73 Gew.-%, bevorzugt von 58 Gew.-% bis 67 Gew.-%, besonders bevorzugt von 61 Gew.-% bis 66 Gew.-%, aufweist, bezogen auf das Gesamtgewicht des Füllers.

6. Betonelement nach einem der Ansprüche 4 oder 5, **dadurch gekennzeichnet, dass** der Füller ausgewählt ist aus der Gruppe bestehend aus Flugasche, Hüttensand, Gesteinsmehle, vorzugsweise klassifizierte Gesteinsmehle, Kalksteinmehle, vorzugsweise klassifizierte Kalksteinmehle, und Mischungen davon.

7. Betonelement nach einem der vorstehenden Ansprüche, **dadurch gekennzeichnet, dass** die Mischung 15 Gew.-% bis 40 Gew.-%, bevorzugt 20 Gew.-% bis 30 Gew.-%, weiter bevorzugt 20 Gew.-% bis 24 Gew.-% oder 26 Gew.- % bis 29 Gew.-%, besonders bevorzugt 22 Gew.-% bis 24 Gew.-%, an latenthydraulischem Bindemittel und/oder puzzolanischem Bindemittel enthält, bezogen auf das Gesamtgewicht der Mischung.

8. Betonelement nach einem der vorstehenden Ansprüche, **dadurch gekennzeichnet, dass** das latenthydraulische Bindemittel ausgewählt ist aus der Gruppe bestehend aus Schlacke, Hochofenschlacke, vorzugsweise Hüttensand, insbesondere gemahlener Hüttensand, elektrothermische Phosphorschlacke, Stahlschlacke und Mischungen davon, und/oder dass im latenthydraulischen Bindemittel das Molverhältnis von (CaO + MgO):SiO₂ von 0,8 bis 2,5, bevorzugt von 1,0 bis 2,0, beträgt.

9. Betonelement nach einem der vorstehenden Ansprüche, **dadurch gekennzeichnet, dass** das puzzolanische Bindemittel ausgewählt ist aus der Gruppe bestehend aus amorphem Siliciumdioxid, gefälltem Siliciumdioxid, pyrogenem Siliciumdioxid, Mikrosilica, Glasmehl, Flugasche wie Braunkohlenflugasche oder Steinkohlenflugasche, Metakaolin, natürliche Puzzolane wie Tuff, Trass oder Vulkanasche, natürliche und synthetische Zeolithe und Mischungen davon.

10. Betonelement nach einem der vorstehenden Ansprüche, **dadurch gekennzeichnet, dass** das alkalische Härtungsmittel ausgewählt ist aus der Gruppe bestehend aus Alkalimetallhydroxide, Alkalimetallsilikate und Mischungen davon.

11. Betonelement nach einem der vorstehenden Ansprüche, **dadurch gekennzeichnet, dass** die Mischung 3,15 Gew.-% bis 4,85 Gew.-%, weiter bevorzugt 3,25 Gew.-% bis 3,65 Gew.-% oder 4,0 Gew.-% bis 4,75 Gew.-%, noch bevorzugter 4,25 Gew.-% bis 4,75 Gew.-%, besonders bevorzugt 4,35 Gew.-% bis 4,55 Gew.-%, des alkalischen Härtungsmittels enthält, bezogen auf das Gesamtgewicht der Mischung.

12. Betonelement nach einem der vorstehenden Ansprüche, **dadurch gekennzeichnet, dass** die Mischung 3 Gew.-% bis 7 Gew.-%, bevorzugt 3,5 Gew.- % bis 6,5 Gew.-%, weiter bevorzugt 4,0 Gew.-% bis 6,2 Gew.-%, noch bevorzugter 4,2 Gew.-% bis 4,9 Gew.-% oder 5,2 Gew.-% bis 6,2 Gew.-%, besonders bevorzugt 4,2 Gew.-% bis 4,8 Gew.-%, Wasser enthält, bezogen auf das Gesamtgewicht der Mischung.

13. Betonelement nach einem der vorstehenden Ansprüche, **dadurch gekennzeichnet, dass** die Mischung Erhärtungsregler, insbesondere Abbindeverzögerer und/oder Abbindebeschleuniger, aufweist.

14. Betonelement nach einem der vorstehenden Ansprüche, **dadurch gekennzeichnet, dass** die Mischung Zement und/oder einen oder mehrere Zuschlagstoffe wie Kies, Splitt, Sand, Perlit, Kieselguhr oder Vermiculit, und/oder ein oder mehrere Additive ausgewählt aus der Gruppe bestehend aus Weichmacher, Antischaummittel, Wasserrückhaltemittel, Dispergiermittel, Pigment, Fasern, redispergierbare Pulver, Netzmittel, Imprägniermittel, Komplexbildner und Rheologieadditive enthält.

15. Betonelement nach einem der vorstehenden Ansprüche, **dadurch gekennzeichnet, dass** das Betonelement ein Betonstein, eine Betonplatte, ein Betonmauerelement oder eine Betonstufe ist.

16. Verfahren zur Herstellung eines Betonelements gemäß einem der Ansprüche 1 bis 15, umfassend die Schritte:
a. Herstellen einer Zusammensetzung enthaltend als Bestandteile
i. königes Material, wobei das körnige Material bei einer Sieblochweite von 2 mm einen Siebdurchgang von 35,5 Gew.-% bis 99,5 Gew.-% und bei einer Sieblochweite von 0,25 mm einen Siebdurchgang von 2,5 Gew.-% bis 33,5 Gew.-% aufweist
ii. optional Pigment,
iii. optional Füller,
iv. Wasser,
v. latenthydraulisches Bindemittel und/oder puzzolanisches Bindemittel, und
vi. alkalisches Härtungsmittel, wobei das alkalische Härtungsmittel ausgewählt ist aus der Gruppe bestehend aus Alkalimetalloxide, Alkalimetallhydroxide, Alkalimetallcarbonate, Alkalimetallsilikate, Alkalimetallaluminate und Mischungen davon,
b. Mischen der Zusammensetzung um eine Mischung zu erhalten, die 3 Gew.- % bis 5 Gew.-% des alkalischen Härtungsmittels enthält, bezogen auf das Gesamtgewicht der Mischung,
c. Einfüllen der Mischung in mindestens eine Form,
d. Verdichten der Mischung, um mindestens ein Grünbetonelement zu erhalten.

17. Verfahren nach Anspruch 16, **dadurch gekennzeichnet, dass** die Bestandteile der Zusammensetzung in der angegebenen Reihenfolge dosiert werden.

18. Verfahren nach einem der Ansprüche 16 oder 17, **dadurch gekennzeichnet, dass** vor dem Verdichten auf die Mischung in der mindestens einen Form eine Portion eines gekörnten Materials enthaltend (a) eine Einstreukomponente mit einem mittleren Korndurchmesser, bestimmt durch Sieben, von 0,1 bis 5 mm in einer Menge von 65 bis 95 Gew.-% und (b) Bindemittel in einer Menge von 5 bis 35 Gew.-%, bezogen auf die Gesamtzusammensetzung des gekörnten Materials, aufgebracht wird.

19. Verfahren nach Anspruch 18, **dadurch gekennzeichnet, dass** das im gekörnten Material enthaltene Bindemittel ein anorganisches Bindemittel wie Zement, hydraulischer Kalk, Gips oder Wasserglas ist oder dass das im gekörnten Material enthaltene Bindemittel ein organisches Bindemittel wie Kunstoffdispersionen, Acrylatharze, Alkydharze, Epoxidharze, Polyurethane, SolGel-Harze oder Siliconharzemulsionen ist, und/oder dass als Einstreukomponente eine Einstreukomponente mit einem mittleren Korndurchmesser, bestimmt durch Sieben, von 0,1 bis 1,8 mm oder von 1,2 bis 5 mm, eingesetzt wird, und/oder dass die Einstreukomponente eine Gesteinsmischung ist oder enthält, oder dass die Einstreukomponente mindestens Material ausgewählt aus der Gruppe bestehend aus Halbedelsteinen, Edelsteinen, Glimmer, Metallspänen, Glas und Kunststoffpartikeln enthält.

20. Verfahren nach einem der Ansprüche 16 bis 19, **dadurch gekennzeichnet, dass** die Oberflächen und/oder Ränder des mindestens einen Grünbetonelements mit Bürsten bearbeitet und dabei strukturiert und/oder aufgeraut und/oder geglättet und/oder Überstände an den Rändern abgearbeitet werden.

21. Verfahren nach einem der Ansprüche 16 bis 20, **dadurch gekennzeichnet, dass** auf die Oberfläche des mindestens einen Grünbetonelements ein Versiegelungs- und/oder Imprägniermittel aufgebracht wird.

22. Verfahren nach einem der Ansprüche 16 bis 21, **dadurch gekennzeichnet, dass** das Grünbetonelement ausgehärtet wird, um ein Betonelement zu erhalten, wobei das Betonelement vorzugsweise nach dem Aushärten durch Schleifen, Strahlen, Bürsten und/oder Strukturieren des Betonelements bearbeitet wird.

## Claims

1. Concrete element comprising a core concrete layer and a face concrete layer, wherein the face concrete layer is obtained by compacting and curing a mixture comprising a latent hydraulic binder and/or a pozzolanic binder, water, a granular material and 3 wt.% to 5 wt.% of an alkaline hardener, based on the total weight of the mixture, wherein the granular material has, at a screen hole width of 2 mm, a fine fraction of 35.5 wt.% to 99.5 wt.% and, at a screen hole width of 0.25 mm, a fine fraction of 2.5 wt.% to 33.5 wt.%, in each case based on the total weight of the granular material, and wherein the alkaline hardener is selected from the group consisting of alkali metal oxides, alkali metal hydroxides, alkali metal carbonates, alkali metal silicates, alkali metal aluminates and mixtures thereof.

2. Concrete element according to claim 1, **characterized in that** the granular material has, at a screen hole width of 2 mm, a fine fraction of 42.5 wt.% to 99.5 wt.%, more preferably of 56.5 wt.% to 98.5 wt.%, particularly preferably of 72.5 wt.% to 97.5 wt.%, and, at a screen hole width of 0.25 mm, a fine fraction of 2.5 wt.% to 27.5 wt.%, more preferably of 2.5 wt.% to 22.5 wt.%, yet more preferably of 2.5 wt.% to 21.5 wt.%, particularly preferably 2.5 wt.% to 8 wt.% or 11.5% to 21.5 wt.%, based on the total weight of the granular material.

3. Concrete element according to one of the preceding claims, **characterized in that** the mixture contains 55 to 80 wt.%, preferably 60 wt.% to 75 wt.%, more preferably 60 wt.% to 72 wt.% %, particularly preferably 60 wt.% to 65 wt.%, in particular 60 to 64 wt.%, or 67 wt.% to 72 wt.%, of the granular material, based on the total weight of the mixture.

4. Concrete element according to one of the preceding claims, **characterized in that** the mixture contains 1 wt.% to 30 wt.%, preferably 1 wt.% to 20 wt.%, more preferably 5 wt.% to 18 wt.%, yet more preferably 5 wt.% to 15 wt.%, even more preferably 5 wt.% to 10 wt.%, particularly preferably 6 wt.% to 8 wt.%, of a filler, based on the total weight of the mixture.

5. Concrete element according to claim 4, **characterized in that** the filler has, at a screen hole width of 0.025 mm, a fine fraction of 63 wt.% to 99 wt.%, preferably of 68 wt.% to 99 wt.%, more preferably of 90 wt.% to 99 wt.%, particularly preferably of 95 wt.% to 99 wt.%, and, at a screen hole width of 0.015 mm, a fine fraction of 38 wt.% to 73 wt.%, preferably of 58 wt.% to 67 wt.%, particularly preferably of 61 wt.% to 66 wt.%, based on the total weight of the filler.

6. Concrete element according to one of claims 4 or 5, **characterized in that** the filler is selected from the group consisting of fly ash, slag sand, rock powder, preferably classified rock powder, limestone powder, preferably classified limestone powder, and mixtures thereof.

7. Concrete element according to one of the preceding claims, **characterized in that** the mixture contains 15 wt.% to 40 wt.%, preferably 20 wt.% to 30 wt.%, more preferably 20 wt.% to 24 wt.% or 26 wt.% to 29 wt.%, even more preferably 22 wt.% to 24 wt.%, of latent hydraulic binder and/or pozzolanic binder, based on the total weight of the mixture.

8. Concrete element according to one of the preceding claims, **characterized in that** the latent hydraulic binder is selected from the group consisting of slag, blast furnace slag, preferably slag sand, in particular ground slag sand, electrothermal phosphorus slag, steel slag and mixtures thereof and/or **in that** the molar ratio of (CaO + MgO):SiO₂ in the latent hydraulic binder is from 0.8 to 2.5, preferably from 1.0 to 2.0.

9. Concrete element according to one of the preceding claims, **characterized in that** the pozzolanic binder is preferably selected from the group consisting of amorphous silicon dioxide, precipitated silicon dioxide, pyrogenic silicon dioxide, microsilica, glass powder, fly ash such as lignite fly ash or hard coal fly ash, metakaolin, natural pozzolans such as tuff, trass or volcanic ash, natural and synthetic zeolites and mixtures thereof.

10. Concrete element according to one of the preceding claims, **characterized in that** the alkaline hardener is selected from the group consisting of alkali metal hydroxides, alkali metal silicates and mixtures thereof.

11. Concrete element according to one of the preceding claims, **characterized in that** the mixture contains 3.15 wt.% to 4.85 wt.%, more preferably 3.25 wt.% to 3.65 wt.% or 4.0 wt.% to 4.75 wt.%, even more preferably 4.25 wt.% to 4.75 wt.%, particularly preferably 4.35 wt.% to 4.55 wt.%, of the alkaline hardener, based on the total weight of the mixture.

12. Concrete element according to one of the preceding claims, **characterized in that** the mixture contains 3 wt.% to 7 wt.%, preferably 3.5 wt.% to 6.5 wt.%, more preferably 4.0 wt.% to 6.2 wt.%, even more preferably 4.2 wt.% to 4.9 wt.% or 5.2 wt.% to 6.2 wt.%, particularly preferably 4.2 wt.% to 4.8 wt.%, of water, based on the total weight of the mixture.

13. Concrete element according to one of the preceding claims, **characterized in that** the mixture has hardening regulators, in particular setting retarders and/or setting accelerators.

14. Concrete element according to one of the preceding claims, **characterized in that** the mixture contains cement and/or one or more additives such as gravel, grit, sand, perlite, kieselguhr or vermiculite, and/or one or more additives selected from the group consisting of plasticizers, antifoaming agents, water retention agents, dispersants, pigments, fibers, redispersible powders, wetting agents, impregnating agents, complexing agents and rheology additives.

15. Concrete element according to one of the preceding claims, **characterized in that** the concrete element is a concrete block, a concrete slab, a concrete wall element or a concrete step.

16. Method for producing a concrete element according to one of claims 1 to 15, comprising the following steps:
a. preparing a composition containing as constituents
i. granular material, wherein the granular material has, at a
screen hole width of 2 mm, a fine fraction of 35.5 wt.% to 99.5 wt.% and, at a screen hole width of 0.25 mm, a fine fraction of 2.5 wt.% to 33.5 wt.%
ii. optional pigment,
iii. optional filler,
iv. water,
v. latent hydraulic binder and/or pozzolanic binder, and
vi. alkaline hardener, wherein the alkaline hardener is preferably selected from the group consisting of alkali metal oxides, alkali metal hydroxides, alkali metal carbonates, alkali metal silicates, alkali metal aluminates and mixtures thereof,
b. mixing the composition to obtain a mixture containing 3 wt.% to 5 wt.% of the alkaline hardener, based on the total weight of the mixture,
c. filling the mixture into at least one mold,
d. compacting the mixture to obtain at least one green concrete element.

17. Method according to claim 16, **characterized in that** the constituents of the composition are metered in the order given.

18. Method according to one of claims 16 or 17, **characterized in that** a portion of a granular material containing (a) a litter component with an average grain diameter, determined by screening, of 0.1 to 5 mm in an amount of 65 to 95 wt.%, and (b) binder in an amount of 5 to 35 wt.%, based on the total composition of the granular material, is applied to the mixture in the at least one mold before the compaction.

19. Method according to claim 18, **characterized in that** the binder contained in the granular material is an inorganic binder such as cement, hydraulic lime, gypsum or waterglass or **in that** the binder contained in the granular material is an organic binder such as plastics dispersions, acrylate resins, alkyd resins, epoxy resins, polyurethanes, sol-gel resins or silicone resin emulsions and/or **in that** a litter component with an average grain diameter, determined by screening, of 0.1 to 1.8 mm or of 1.2 to 5 mm is used as the litter component, and/or **in that** the litter component is or contains a rock mixture, or **in that** the litter component contains at least material selected from the group consisting of semi-precious stones, precious stones, mica, metal chips, glass and plastics particles.

20. Method according to one of claims 16 to 19, **characterized in that** the surfaces and/or edges of the at least one green concrete element are processed using brushes and thus structured and/or roughened and/or smoothed and/or protrusions are reduced at the edges.

21. Method according to one of claims 16 to 20, **characterized in that** a sealing and/or waterproofing agent is applied to the surface of the at least one green concrete element.

22. Method according to one of claims 16 to 21, **characterized in that** the green concrete element is cured to obtain a concrete element, the concrete element preferably being processed after curing by grinding, blasting, brushing and/or structuring the concrete element.

## Revendications

1. Élément en béton comprenant une couche centrale en béton et une couche de parement en béton, la couche de parement en béton étant obtenue par compactage et prise d'un mélange contenant un liant hydraulique latent et/ou un liant pouzzolanique, de l'eau, un matériau granulaire et 3 % en poids à 5 % en poids d'un durcisseur alcalin, par rapport au poids total du mélange, le matériau granulaire présentant, à une largeur de maille de tamis de 2 mm, un taux de passage de 35,5 % en poids à 99,5 % en poids et, à une largeur de maille de tamis de 0,25 mm, un taux de passage de 2,5 % en poids à 33,5 % en poids, respectivement par rapport au poids total du matériau granulaire et le durcisseur alcalin étant choisi dans le groupe constitué par les oxydes de métal alcalin, les hydroxydes de métal alcalin, les carbonates de métal alcalin, les silicates de métal alcalin, les aluminates de métal alcalin et leurs mélanges.

2. Élément en béton selon la revendication 1, **caractérisé en ce que** le matériau granulaire présente, à une largeur de maille de tamis de 2 mm, un taux de passage de 42,5 % en poids à 99,5 % en poids, plus préférablement de 56,5 % en poids à 98,5 % en poids, de manière particulièrement préférée de 72,5 % en poids à 97,5 % en poids et, à une largeur de maille de tamis de 0,25 mm, un taux de passage de 2,5 % en poids à 27,5 % en poids, plus préférablement de 2,5 % en poids à 22,5 % en poids, encore plus préférablement de 2,5 % en poids à 21,5 % en poids, de manière particulièrement préférée de 2,5 % en poids à 8 % en poids ou de 11,5 % en poids à 21,5 % en poids, par rapport au poids total du matériau granulaire.

3. Élément en béton selon l'une des revendications précédentes, **caractérisé en ce que** le mélange contient 55 % en poids à 80 % en poids, de préférence 60 % en poids à 75 % en poids, plus préférablement 60 % en poids à 72 % en poids, de manière particulièrement préférée 60 % en poids à 65 % en poids, en particulier 60 à 64 % en poids ou 67 % en poids à 72 % en poids, du matériau granulaire, par rapport au poids total du mélange.

4. Élément en béton selon l'une des revendications précédentes, **caractérisé en ce que** le mélange contient 1 % en poids à 30 % en poids, de préférence 1 % en poids à 20 % en poids, plus préférablement 5 % en poids à 18 % en poids, encore plus préférablement 5 à 15 % en poids, encore plus préférablement 5 % en poids à 10 % en poids, de manière particulièrement préférée 6 % en poids à 8 % en poids, d'une charge, par rapport au poids total du mélange.

5. Élément en béton selon la revendication 4, **caractérisé en ce que** la charge présente, à une largeur de maille de tamis de 0,025 mm, un taux de passage de 63 % en poids à 99 % en poids, de préférence de 68 % en poids à 99 % en poids, plus préférablement de 90 % en poids à 99 % en poids, de manière particulièrement préférée de 95 % en poids à 99 % en poids et, à une largeur de maille de tamis de 0,015 mm, un taux de passage de 38 % en poids à 73 % en poids, de préférence de 58 % en poids à 67 % en poids, de manière particulièrement préférée de 61 % en poids à 66 % en poids, par rapport au poids total de la charge.

6. Élément en béton selon l'une des revendications 4 ou 5,
**caractérisé en ce que** la charge est choisie dans le groupe constitué par les cendres volantes, le laitier granulé, les farines de pierre, de préférence les farines de pierre classifiées, les farines de calcaire, de préférence les farines de calcaire classifiées, et leurs mélanges.

7. Élément en béton selon l'une des revendications précédentes, **caractérisé en ce que** le mélange contient 15 % en poids à 40 % en poids, de préférence 20 % en poids à 30 % en poids, plus préférablement 20 % en poids à 24 % en poids ou 26 % en poids à 29 % en poids, de manière particulièrement préférée 22 % en poids à 24 % en poids, de liant hydraulique latent et/ou de liant pouzzolanique, par rapport au poids total du mélange.

8. Élément en béton selon l'une des revendications précédentes,
**caractérisé en ce que** le liant hydraulique latent est choisi dans le groupe constitué par le laitier, le laitier de haut-fourneau, de préférence le laitier granulé, en particulier le laitier granulé broyé, le laitier phosphoré électrothermique, le laitier d'acier et leurs mélanges et/ou **en ce que**, dans le liant hydraulique latent, le rapport molaire de (CaO + MgO):SiO₂ est de 0,8 à 2,5, de préférence de 1,0 à 2,0.

9. Élément en béton selon l'une des revendications précédentes,
**caractérisé en ce que** le liant pouzzolanique est choisi dans le groupe constitué par le dioxyde de silicium amorphe, le dioxyde de silicium précipité, le dioxyde de silicium pyrogène, la microsilice, la farine de verre, les cendres volantes telles que les cendres volantes de lignite ou d'anthracite, le métakaolin, les pouzzolanes naturelles telles que le tuf, le trass ou les cendres volcaniques, les zéolithes naturelles et synthétiques et leurs mélanges.

10. Élément en béton selon l'une des revendications précédentes,
**caractérisé en ce que** le durcisseur alcalin est choisi dans le groupe constitué par les hydroxydes de métal alcalin, les silicates de métal alcalin et leurs mélanges.

11. Élément en béton selon l'une des revendications précédentes,
**caractérisé en ce que** le mélange contient 3,15 % en poids à 4,85 % en poids, plus préférablement 3,25 % en poids à 3,65 % en poids ou 4,0 % en poids à 4,75 % en poids, encore plus préférablement 4,25 % en poids à 4,75 % en poids, de manière particulièrement préférée 4,35 % en poids à 4,55 % en poids du durcisseur alcalin, par rapport au poids total du mélange.

12. Élément en béton selon l'une des revendications précédentes,
**caractérisé en ce que** le mélange contient 3 % en poids à 7 % en poids, de préférence 3,5 % en poids à 6,5 % en poids, plus préférablement 4,0 % en poids à 6,2 % en poids, encore plus préférablement 4,2 % en poids à 4,9 % en poids ou 5,2 % en poids à 6,2 % en poids, de manière particulièrement préférée 4,2 % en poids à 4,8 % en poids, d'eau, par rapport au poids total du mélange.

13. Élément en béton selon l'une des revendications précédentes,
**caractérisé en ce que** le mélange contient des régulateurs du durcissement, en particulier des retardateurs de prise et/ou des accélérateurs de prise.

14. Élément en béton selon l'une des revendications précédentes,
**caractérisé en ce que** le mélange contient du ciment et/ou un ou plusieurs agrégats tels que le gravier, les gravillons, le sable, la perlite, le kieselguhr ou la vermiculite et/ou un ou plusieurs additifs choisis dans le groupe constitué par les plastifiants, les antimousses, les agents de rétention d'eau, les dispersants, les pigments, les fibres, les poudres redispersibles, les mouillants, les agents d'imprégnation, les complexants et les additifs de rhéologie.

15. Élément en béton selon l'une des revendications précédentes,
**caractérisé en ce que** l'élément en béton est un bloc en béton, une dalle en béton, un élément mural en béton ou une marche en béton.

16. Procédé de fabrication d'un élément en béton selon l'une des revendications 1 à 15, comprenant les étapes de :
a. préparation d'une composition contenant, comme constituants
i. un matériau granulaire, le matériau granulaire présentant,
à une largeur de maille de tamis de 2 mm, un taux de passage de 35,5 % en poids à 99,5 % en poids et, à une largeur de maille de tamis de 0,25 mm, un taux de passage de 2,5 % en poids à 33,5 % en poids,
ii. éventuellement un pigment,
iii. éventuellement une charge,
iv. de l'eau,
v. un liant hydraulique latent et/ou un liant pouzzolanique et
vi. un durcisseur alcalin, le durcisseur alcalin étant choisi dans le groupe constitué pas les oxydes de métal alcalin, les hydroxydes de métal alcalin, les carbonates de métal alcalin, les silicates de métal alcalin, les aluminates de métal alcalin et leurs mélanges,
b. mélange de la composition pour obtenir un mélange qui contient 3 % en poids à 5 % en poids du durcisseur alcalin, par rapport au poids total du mélange,
c. introduction du mélange dans au moins un moule,
d. compactage du mélange pour obtenir au moins un élément en béton cru.

17. Procédé selon la revendication 16, **caractérisé en ce que** les constituants de la composition sont dosés dans l'ordre indiqué.

18. Procédé selon l'une des revendications 16 ou 17,
**caractérisé en ce qu'**avant le compactage, on applique sur le mélange dans ledit au moins un moule une portion d'un matériau granulaire contenant (a) un composant de saupoudrage présentant un diamètre moyen de grain, déterminé par tamisage, de 0,1 à 5 mm en une quantité de 65 à 95 % en poids et (b) un liant en une quantité de 5 à 35 % en poids, par rapport à la composition totale du matériau granulaire.

19. Procédé selon la revendication 18, **caractérisé en ce que** le liant contenu dans le matériau granulaire est un liant inorganique tel que le ciment, la chaux hydraulique, le plâtre ou le verre soluble ou **en ce que** le liant contenu dans le matériau granulaire est un liant organique, tel que les dispersions de matériau synthétique, les résines d'acrylate, les résines alkyde, les résines époxyde, les polyuréthanes, les résines de sol-gel ou les émulsions de résine de silicone et/ou **en ce qu'**on utilise, en tant que composant de saupoudrage, un composant de saupoudrage comportant un diamètre moyen de grain, déterminé par tamisage, de 0,1 à 1,8 mm ou de 1,2 à 5 mm, et/ou **en ce que** le composant de saupoudrage est ou contient un mélange de pierre ou **en ce que** le composant de saupoudrage contient au moins un matériau choisi dans le groupe constitué par les pierres semi-précieuses, les pierres précieuses, le mica, les copeaux métalliques, le verre et les particules en matériau synthétique.

20. Procédé selon l'une des revendications 16 à 19, **caractérisé en ce que** les surfaces et/ou les bords de l'au moins un élément en béton cru sont traités par des brosses et ainsi structurés et/ou rendus rugueux et/ou lissés et/ou des saillies au niveau des bords sont traitées.

21. Procédé selon l'une des revendications 16 à 20, **caractérisé en ce qu'**un agent d'étanchéité et/ou d'imprégnation est appliqué sur la surface de l'au moins un élément en béton cru.

22. Procédé selon l'une des revendications 16 à 21, **caractérisé en ce que** l'élément en béton cru est durci pour obtenir un élément en béton, l'élément en béton étant de préférence traité par meulage, sablage, brossage et/ou structuration de l'élément en béton après le durcissement.
